# EUROPEAN PATENT SPECIFICATION

(11) **EP 0 459 785 B1**
(45) Date of publication and mention of the grant of the patent: **13.07.1994**
(21) Application number: 91304857.5
(22) Date of filing: 29.05.1991
(51) Int. Cl.: F24H 1/40, F24H 8/00

(54) **Hot water boilers**
Heisswasserkessel
Chaudières à eau chaude

(30) Priority: 30.05.1990 GB 9012032
(43) Date of publication of application: 04.12.1991
(73) Proprietor: CARADON HEATING LIMITED, Hull, North Humberside HU5 4JN (GB)
(72) Inventor: Bratley, Roy, Hessle, Hull, HU13 0HP (GB)
(74) Representative: Lerwill, John

(56) References cited:
- FR-A- 2 314 448
- FR-A- 2 506 910
- GB-A- 2 205 150

## Description

This invention relates to hot water boilers for domestic, industrial or commercial use, of the kind having a heat exchanger comprising a ring of horizontal tubes enclosing a generally cylindrical combustion chamber, and a burner disposed within the combustion chamber. Such a boiler is shown for example in FR-A-2314448.

A boiler of the above kind is currently marketed by applicants under the trade name CONCORD SUPER, and has met with substantial commercial success, particularly for industrial/commercial applications. A particular design feature of the boiler is its ability to be readily connected with one or more further such boilers to form a compact multi-module installation, the number of modules, that is to say, individual boilers employed being selected in accordance with the desired output capacity required. This ability of the boiler to be readily incorporated into a multi-module installation arises because of the generally cylindrical and horizontal arrangement of the combustion chamber between the water tubes on the outside and the burner within it. The boiler, however, can be used alone where a small output capacity is required.

For increased thermal efficiency applicants are seeking to provide a boiler of the kind exemplified by their CONCORD SUPER boiler with the capability to condense water vapour from the combustion gases so as to recover the latent heat of vaporization from the gases. Accordingly, and from one aspect of the invention, there is provided a hot water boiler, which has a heat exchanger comprising a ring of horizontal water tubes enclosing a generally cylindrical combustion chamber, and a burner disposed within the combustion chamber, the boiler being characterised by:
(a) an additional, condensing, heat-exchanger comprising a plurality of horizontal further water tubes arranged in an elongate group generally beneath the ring of first said water tubes;
(b) water connection means at the ends of the first and further water tubes and connecting them together in a series-parallel flow path for water to be heated to flow through the further water tubes and thence through the first water tubes; and
(c) an enclosure for the ring of first water tubes and the group of further water tubes, the enclosure having an opening which is located beneath the further water tubes and by which combustion gases from the burner and moisture condensed on the further water tubes may leave the boiler having passed the further water tubes in cross-flow mode and as two convergent flows.

One example of a boiler incorporating features of the invention is shown in the accompanying greatly-simplified drawings, in which:
Fig.1 is a sectional elevation, largely diagrammatic, showing the working parts of the boiler;
Fig.2 is a sectional elevation on line II-II in Fig,1; and
Figs.3 and 4 are diagrammatic representations, viewed as indicated by lines III-III and IV-IV respectively in Fig.1, showing the layout of the manifolds of the heat exchanger and in each case indicating the direction of water flow through the manifold. In Figs. 3,4 water flow through the water tubes is represented by a dot for water flowing out of the plane of the paper and towards the reader, and by a cross for water flowing into the plane of the paper away from the reader.

The boiler may be one module of a plurality of similar modules of a multi-module installation. In such circumstances the individual boilers are preferably mounted in a common casing (not shown) with suitable provision for disposal of flue gas and with common services (e.g gas and power supplies).

Referring now to the drawings, the or each boiler has a heat exchanger 10, and a gas burner 12 which is supplied with a mixture of gas and air by a combustion fan 14 in an air inlet system having an air feed duct 16. The duct 16 (which may be joined to similar ducts for other such boilers) preferably brings clean air for combustion from outside the boiler house. Also mounted or associated with the air inlet system and the burner are a gas valve 18 by which gas is fed to the boiler, and an igniter with which is associated suitable instrumentation including probes for detection of ignition and burner flame. The igniter and its instrumentation are collectively indicated at 20.

A small auxiliary fan 22, mounted on the drive shaft 24 of the combustion fan and driven by the same motor 26, is arranged to extract dry air from the duct 16 to provide an ambience of dry air around the ignition and burner probes. In this way the risk of electrical short circuits and corrosion of the probes due to moisture produced during combustion is substantially reduced.

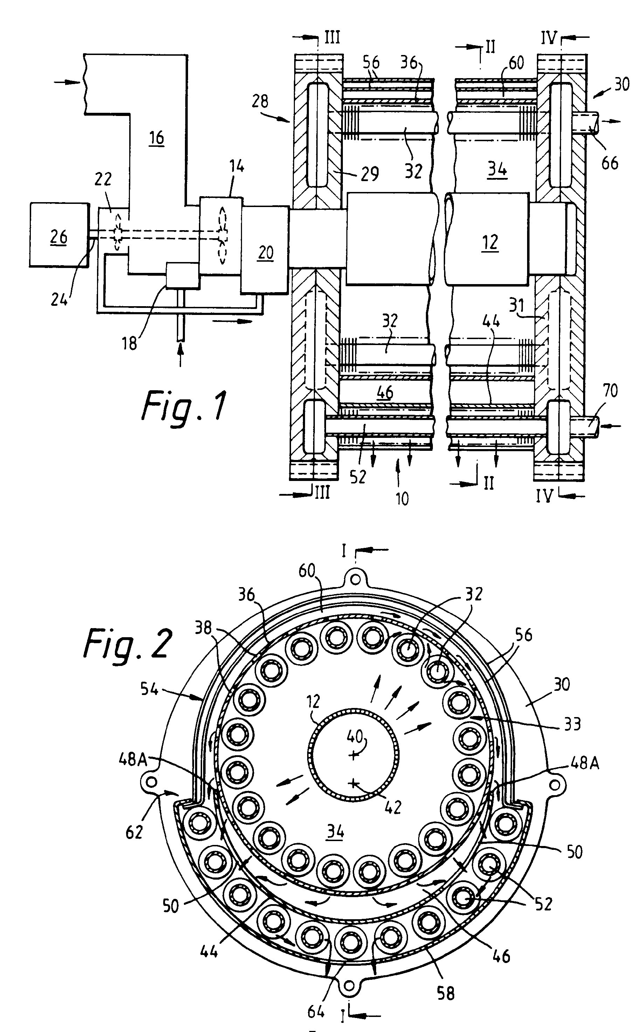

The heat exchanger 10 comprises a pair of circular manifolds 28, 30 having their inner plates 29, 31 joined by an annular ring 33 of parallel and horizontal water tubes 32 forming a non-condensing primary part of the heat exchanger. In this example there are twenty tubes 32, all finned and made of aluminium. The tube ring 33 concentrically surrounds a cylindrical combustion chamber 34 containing the burner 12, and itself lies concentrically within a cylindrical shroud 36 formed with longitudinally extending, elongate apertures 38. One of these apertures is provided for each tube, the aperture corresponding radially with its respective tube in relation to the common central axis 40 of the shroud, tube ring, combustion chamber and burner. As can be seen from Fig.2, the boiler is substantially symmetrical in relation to the longitudinal vertical plane through the axis 40.

As can be seen from Figs. 2 to 4, the manifolds 28,30 are circular but their central axis 42 is offset vertically below the axis 40. Extending between the manifolds below the shroud 36 is a baffle 44 (Fig.2) which is part-cylindrical and of such radius and circumferential length as to define with the shroud a crescent-shaped chamber 46 which is centred on a vertical plane through the axis 40. The edges of the baffle meet the shroud where indicated at 48A. Adjacent its edges the baffle has two slots (or slot groups) 50 of substantial circumferential extent for the purpose later to become apparent.

Immediately below the baffle 44 is a laterally elongate group of eleven parallel and finned condensing water tubes 52 which extend horizontally between the inner plates 29, 31 of the manifolds 28, 30 and which together form a condensing secondary part of the heat exchanger 10. The tubes 52 preferably are made of aluminium; they are aligned as a single row so as to lie on an upwardly concave arc below the level of the burner 12; any condensate formed on them can therefore escape from the boiler in a generally unobstructed manner and without contacting the burner or the tubes 32 in particular.

All of the tubes 32, 52 are located within an outer housing 54 having upper and lower parts 56, 58. The upper part 56 is separable from the lower part 58 for maintenance, and is double-skinned to provide heat insulation; moreover, it is unperforated and so protects the heat exchanger from condensate dripping from any similar boiler which may be mounted above it.

A flue gas chamber 60 is defined between the shroud 36 and the upper part 56 of the housing 54. As shown at 62, the edges of the upper part 56 overlap and are detachable from those of the lower part 58 adjacent the lateral extremities of the part-cylindrical array of condensing tubes 52.

The lower part 58 of the housing 54 has a central longitudinal opening 64 at the bottom of the boiler to serve as a flue gas outlet and to allow any free condensate liquid formed on the condensing tubes 52 to escape with the flue gases.

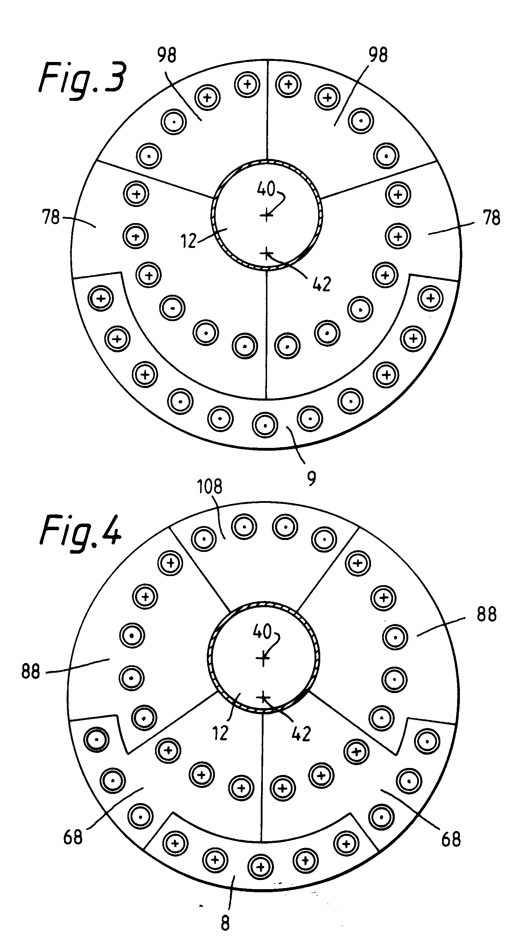

The water to be heated by the boiler will usually be circulated in a closed circuit for space heating and/or for indirect heating of further water. The water enters the boiler by inlet 70 into the lower chamber 8 (Fig.4) of manifold 30, and passes from there in parallel through the centre five of the condensing tubes 52 to manifold chamber 9 of manifold 28 (Fig.3), returning via the other six tubes 52, and thence in succession via manifold chambers 68 (Fig.4), 78 (Fig.3), 88 (Fig.4), 98 (Fig.3) and 108 (Fig.4) and the tubes 32 joining those chambers together. The six tubes 52 supplied from the manifold chamber 9 form a divided group of parallel-connected tubes arranged three on each side of the central group of five tubes 52. On finally leaving the manifold chamber 108 the heated water passes out through hot water outlet 66.

The water is heated in the tubes 32 by cross-flow of flue gases from the burner leaving via the apertures 38; some of the flue gas passes into chamber 60, and the remainder passes into chamber 46. The flue gas collected in chambers 60 and 46 flows (in the latter case via the slots or slot groups 50 in baffle 44) in cross flow mode around the condensing tubes 52, forming two opposed and substantially equal flows which converge immediately above the opening 64 and thereafter leave the boiler via the opening. In losing heat to the tubes 52 water of combustion and water vapour drawn in with the air entering the feed duct 16 condenses from the flue gases, to escape with the flue gases via the opening 64. The flow paths of the flue gas are generally indicated by arrows in Fig.2. No condensation occurs on the tubes 32 except, possibly, during occasional and extreme conditions of operation, Whilst in the described arrangement the condensing tubes 52 are arranged on an upwardly concave arc, other arrangements are possible. For example, the condensing tubes may be arranged in the shape of a shallow V the apex of which lies above the gas exit opening in the housing. Furthermore, whilst it is usually preferred that the condensing tubes should be aligned to form a single row, other arrangements are possible; for example, the condensing tubes may be staggered along the elongate group which they form.

## Claims

1. A hot water boiler including a heat exchanger (10) comprising a ring (33) of horizontal water tubes (32) enclosing a generally cylindrical combustion chamber (34), and a burner (12) disposed within the combustion chamber, characterised by:
(a) an additional, condensing, heat-exchanger comprising a plurality of horizontal further water tubes (52) arranged in an elongate group generally beneath the ring (33) of first said water tubes;
(b) water connection means (28, 30) at the ends of the first and further water tubes and connecting them together in a series-parallel flow path for water to be heated to flow through the further water tubes (52) and hence through the first water tubes (32); and
(c) a housing (54) for the ring of first water tubes and the group of further water tubes, the housing having an opening (64) which is located beneath the further water tubes (52) and by which combustion gases from the burner (12) and moisture condensed on the further water tubes may leave the boiler having passed the further water tubes in cross-flow mode and as two convergent flows.

2. A boiler according to claim 1, wherein the housing (54) has upper (56) and lower (58) parts detachably engaged together at the sides of the boiler, the lower part (58) formed with the opening (64).

3. A boiler according to claim 2, wherein the upper part (56) of the enclosure (54) is unperforated so as to shed condensate falling onto it from above.

4. A boiler according to any preceding claim, wherein the ring (33) of first water tubes (32) lies within a shroud (36) having apertures (38) arranged in axial correspondence with the first water tubes, the shroud being spaced from the housing to form a flow path for combustion gases to flow therein towards the said opening (64) having passed through the shroud apertures (38).

5. A boiler according to any preceding claim, wherein a baffle (44) is disposed above the group of further water tubes (52) and arranged to direct the combustion gases to cross the further water tubes in cross-flow mode, beginning at the lateral extremities of the group and terminating at the opening (64) in the housing.

6. A boiler according to claim 5 when dependent from claim 4, wherein the baffle (44) extends to the shroud (36) at each of its ends, and is formed adjacent its ends with apertures (50) through which the combustion gases may pass.

7. A boiler according to claim 6, or to claim 5 when dependent upon claim 4, wherein the baffle (44) forms with the shroud (36) a flow path for combustion gases which have passed through the shroud apertures (38) in a bottom part of the shroud.

8. A boiler according to any preceding claim, wherein the further water tubes (52) are connected by the water connection means (28, 30) to form a central group of parallel connected water tubes located above the opening (64) in the housing (54) and a divided further group of parallel connected water tubes having the tubes of its two parts disposed on either side the central group, the tubes of the central group being upstream of those of the divided further group in the said series-parallel flow path for water to be heated.

## Patentansprüche

1. Heißwasserkessel mit einem Wärmetauscher (10), der einen Ring (33) horizontaler Wasserröhren (32) umfaßt, die einen im allgemeinen zylindrischen Brennraum (34) umgeben, sowie einen Brenner (12), der innerhalb des Brennraums angeordnet ist, **gekennzeichnet durch:**
(a) einen zusätzlichen, kondensierenden Wärmetauscher, der eine Vielzahl von horizontalen weiteren Wasserröhren (52) umfaßt, die in einer Längsgruppe im allgemeinen unterhalb des Rings (33) der ersten Wasserröhren angeordnet sind;
(b) Wasserverbindungseinrichtungen (28, 30) an den Enden der ersten und der weiteren Wasserröhren, die sie in einem Reihen-Parallel-Flußweg für zu erwärmendes Wasser miteinander verbinden, das durch die weiteren Wasserröhren (52) und damit durch die ersten Wasserröhren (32) fließt; und
(c) ein Gehäuse (54) für den Ring von ersten Wasserröhren und die Gruppe weiterer Wasserröhren, wobei das Gehäuse eine Öffnung (64) aufweist, die sich unterhalb der weiteren Wasserröhren (52) befindet, und durch die Verbrennungsgase aus dem Brenner (12) und an den weiteren Wasserröhren kondensierte Feuchtigkeit aus dem Kessel austreten können, die die weiteren Wasserröhren im Kreuzstrombetrieb und als zwei sich einander nähernde Ströme passiert haben.

2. Kessel nach Anspruch 1, wobei das Gehäuse (54) einen Ober- (56) und einen Unterteil (58) hat, die lösbar an den Seiten des Kessels miteinander verbunden sind, wobei der untere Teil (58) mit der Öffnung (64) versehen ist.

3. Kessel nach Anspruch 2, wobei der obere Teil (56) des Gehäuses (54) keine Löcher aufweist, so daß er Kondensat ablaufen läßt, das von oben auf ihn fällt.

4. Kessel nach einem der vorangehenden Ansprüche, wobei der Ring (33) der ersten Wasserröhren (32) in einer Verkleidung (36) liegt, die Öffnungen (38) aufweist, die in axialer Entsprechung zu den ersten Wasserröhren angeordnet sind, wobei die Verkleidung von dem Gehäuse beabstandet ist und so einen Strömungsweg für Verbrennungsgase bildet, die darin in Richtung der Öffnung (64) strömen, nachdem sie die Verkleidungsöffnungen (38) passiert haben.

5. Kessel nach einem der vorangehenden Ansprüche, wobei über der Gruppe weiterer Wasserröhren (52) eine Ablenkplatte (44) angeordnet ist, die die Verbrennungsgase so leitet, daß sie die weiteren Wasserröhren im Kreuzstrombetrieb beginnend an den seitlichen äußeren Enden der Gruppe und endend an der Öffnung (64) in dem Gehäuse kreuzen.

6. Kessel nach Anspruch 5, wenn abhängig von Anspruch 4, wobei die Ablenkplatte (44) sich an jedem ihrer Enden zu der Verkleidung (36) erstreckt und an ihren Enden mit Öffnungen (50) versehen ist, durch die Verbrennungsgase hindurchtreten können.

7. Kessel nach Anspruch 6 oder nach Anspruch 5, wenn abhängig von Anspruch 4, wobei die Ablenkplatte (44) mit der Verkleidung (36) einen Strömungsweg für Verbrennungsgase bildet, die die Verkleidungsöffnungen (38) in einem unteren Teil der Verkleidung passiert haben.

8. Kessel nach einem der vorangehenden Ansprüche, wobei die weiteren Wasserröhren (52) durch die Wasserverbindungseinrichtungen (28, 30) verbunden sind und eine mittlere Gruppe paralleler, verbundener Wasserröhren bilden, die sich oberhalb der Öffnung (64) in dem Gehäuse (54) befindet, sowie eine getrennte weitere Gruppe paralleler, verbundener Wasserröhren, wobei sich die Röhren ihrer beiden Teile zu beiden Seiten der mittleren Gruppe befinden, wobei sich die Röhren der mittleren Gruppe oberhalb der geteilten weiteren Gruppe in dem Reihen-Parallel-Flußweg für zu erwärmendes Wasser befinden.

## Revendications

1. Chaudière à eau chaude comprenant un échangeur de chaleur (10) muni d'un anneau (33) de tubes horizontaux (32) d'eau entourant une chambre de combustion (34) de forme générale cylindrique, et un brûleur (12) placé à l'intérieur de la chambre de combustion, caractérisée par
(a) un échangeur de chaleur supplémentaire de condensation comprenant plusieurs tubes supplémentaires horizontaux (52) d'eau placés sous forme d'un groupe allongé disposé de façon générale sous l'anneau (33) des premiers tubes d'eau,
(b) un dispositif (28, 30) de raccordement d'eau placé aux extrémités des premiers tubes et des tubes supplémentaires d'eau et les raccordant en formant un trajet de circulation en série et en parallèle pour que l'eau qui doit être chauffée circule dans les tubes supplémentaires (52) d'eau puis dans les premiers tubes (32) d'eau, et
(c) un boîtier (54) destiné à loger l'anneau des premiers tubes d'eau et le groupe de tubes supplémentaires d'eau, le boîtier ayant une ouverture (64) placée sous les tubes supplémentaires (52) d'eau et grâce à laquelle les gaz de combustion provenant du brûleur (12) et l'humidité condensée sur les tubes supplémentaires d'eau peuvent quitter la chaudière après passage dans les tubes supplémentaires d'eau en mode à circulation transversale et sous forme de deux courants convergents.

2. Chaudière selon la revendication 1, dans laquelle le boîtier (54) a des parties supérieure (56) et inférieure (58) coopérant mutuellement de manière amovible sur les côtés de la chaudière, la partie inférieure (58) ayant l'ouverture (64).

3. Chaudière selon la revendication 2, dans laquelle la partie supérieure (56) de l'enceinte (54) n'est pas perforée afin qu'elle guide le condensat tombant sur elle par-dessus.

4. Chaudière selon l'une quelconque des revendications précédentes, dans laquelle l'anneau (33) de premiers tubes d'eau (32) se trouve dans un capot (36) ayant des ouvertures (38) qui correspondent axialement aux premiers tubes d'eau, le capot étant placé à distance du boîtier afin qu'un trajet d'écoulement soit formé pour la circulation du gaz de combustion vers ladite ouverture (64) après passage dans les ouvertures (38) du capot.

5. Chaudière selon l'une quelconque des revendications précédentes, dans laquelle un déflecteur (44) est placé au-dessus du groupe de tubes supplémentaires (52) d'eau et est disposé afin qu'il dirige les gaz de combustion de sorte que ceux-ci recoupent les tubes supplémentaires d'eau avec un écoulement transversal, commençant aux extrémités latérales du groupe et se terminant à l'ouverture (64) formée dans le boîtier.

6. Chaudière selon la revendication 5 lorsqu'elle dépend de la revendication 4, dans laquelle le déflecteur (44) rejoint le capot (36) à chacune de ses extrémités, et comporte, près de ses extrémités, des ouvertures (50) par lesquelles les gaz de combustion peuvent s'écouler.

7. Chaudière selon la revendication 6 ou la revendication 5 lorsqu'elle dépend de la revendication 4, dans lequel le déflecteur (44) forme, avec le capot (36), un trajet de circulation des gaz de combustion qui se sont écoulés dans les ouvertures (38) du capot dans une partie inférieure du capot.

8. Chaudière selon l'une quelconque des revendications précédentes, dans laquelle les tubes supplémentaires (52) d'eau sont raccordés par le dispositif (28, 30) de raccordement d'eau pour la formation d'un groupe central de tubes d'eau raccordés en parallèle, placé au-dessus de l'ouverture (64) formée dans le boîtier (54), et un groupe supplémentaire divisé de tubes d'eau raccordés en parallèle, les tubes des deux parties étant disposés de part et d'autre du groupe central, les tubes du groupe central étant placés en amont de ceux du groupe supplémentaire divisé, dans le trajet de circulation en série et en parallèle de l'eau qui doit être chauffée.
